# EUROPEAN PATENT APPLICATION

(11) **EP 4 606 664 A1**
(43) Date of publication of application: **27.08.2025**
(21) Application number: 23879588.4
(22) Date of filing: 02.10.2023
(51) Int. Cl.: B60W 20/50, B60K 6/46, B60W 10/06, B60W 10/08, B60W 20/00, B60W 20/12, E02F 9/24, F01M 13/00, F02D 43/00

(54) **VEHICLE MANAGEMENT SYSTEM**

(30) Priority: 20.10.2022 JP 2022168128
(71) Applicant: Hitachi Construction Machinery Co., Ltd., Tokyo 110-0015 (JP)
(72) Inventor: IIHOSHI Yoichi, Tokyo 100-8280 (JP); MIZUTANI Kenji, Tokyo 110-0015 (JP); MATSUDA Takuya, Tokyo 110-0015 (JP)
(74) Representative: MERH-IP Matias Erny Reichl Hoffmann Patentanwälte PartG mbB
(86) International application number: PCT/JP2023/035938
(87) International publication number: WO 2024/084941

(57) **Abstract**

An object of the present invention is to provide a machine management system that can reliably detect deterioration of components included in the powertrain system of a machine. In order to attain the object, a machine management system that manages a machine having a powertrain system constituted by a plurality of components including an engine includes a processing apparatus that computes input/output energy of one component among the plurality of components on the basis of information concerning the machine sensed by a sensor provided to the machine. The processing apparatus is configured to set, as a stable travelling zone, a travelling zone where the input/output energy is stabilized among travelling zones of the machine, tally values of the input/output energy in the stable travelling zone, and detect deterioration of the one component on the basis of the values of the input/output energy tallied in the stable travelling zone.

## Description

### Technical Field

The present invention relates to a system that detects deterioration of components included in a powertrain system of a machine.

### Background Art

In recent years, a technology to detect an anomaly of an onboard electric power generating apparatus (Patent Document 1) and a technology to detect an anomaly of an engine (Patent Document 2) by analyzing machine data under particular conditions have been disclosed. In Patent Document 1, generated electric power is learned under particular cycle conditions. At the time of evaluation, generated electric power in a case where cycle conditions which are the same as those at the time of learning are satisfied is compared with the learned generated electric power, and, when the generated electric power is smaller than the generated electric power at the time of learning, it is determined that the electric power generating apparatus is experiencing deterioration. In addition, in Patent Document 2, a peak value of blow-by pressure is calculated under conditions that make the engine load high, and, when the peak value is higher than a predetermined value, it is determined that there is an anomaly of the engine.

### Prior Art Document

### Patent Documents

Patent Document 1: U.S. Patent Application Publication No. 2021-0114583
Patent Document 2: JP-2000-305618-A

### Summary of the Invention

### Problems to be Solved by the Invention

However, as for Patent Document 1, consideration regarding a load weight that significantly influences the generated electric power amount is insufficient, and there is a fear that an anomaly is left unnoticed if the load amount is large and, on the other hand, a small load weight is mistaken for deterioration. In addition, as for Patent Document 2, there is a fear that, in a case where blow-by pressure control for causing gas having been blown to a crankcase to return to an intake path is introduced, crank pressure is kept constant, and hence, anomaly determination for the engine becomes difficult. It is also possible that further operation conditions are added in order to solve the problems. This will improve diagnosis reliability, but instead increases required man-hours and also decreases deterioration determination opportunities.

The present invention has been made in view of the problems described above, and an object thereof is to provide a machine management system that can reliably detect deterioration of components included in the powertrain system of a machine.

### Means for Solving the Problems

In order to attain the object described above, there is provided a machine management system that manages a machine having a powertrain system constituted by a plurality of components including an engine, the machine management system including a processing apparatus that computes input/output energy of one component among the plurality of components on the basis of information concerning the machine sensed by a sensor provided to the machine. The processing apparatus is configured to set, as a stable travelling zone, a travelling zone where the input/output energy is stabilized among travelling zones of the machine, tally values of the input/output energy in the stable travelling zone, and detect deterioration of the one component on the basis of the values of the input/output energy tallied in the stable travelling zone.

### Advantages of the Invention

According to the present invention, deterioration determination for the components included in the powertrain system of the machine is performed on the basis of tallying results of the input/output energy of the components in a travelling zone where the input/output energy is stabilized. Thus, deterioration determination opportunities for the components increase, and accordingly it becomes possible to reliably detect deterioration of the components.

### Brief Description of the Drawings

FIG. 1 is a figure depicting an overall view of a mine management system.
FIG. 2 is a figure depicting an energy flow of a powertrain system of a mining dump truck.
FIG. 3 is a block diagram depicting an example of a deterioration determination process for the powertrain system.
FIG. 4 is a flowchart depicting an example of a process performed by a deterioration determining section.
FIG. 5 is a flowchart depicting an example of a process of registering a stable travelling zone in a database or the like.
FIG. 6 is a figure depicting an example of results of visualization of travelling data obtained from one machine in one week.
FIG. 7 is a figure depicting an example of a screen displaying results of tallying a frequency of travelling in stable travelling zones by each machine.
FIG. 8 is a figure depicting an example of a screen displaying results of tallying average fuel energy of each machine in stable travelling zones.
FIG. 9 is a figure depicting an example of distributions of fuel energy used for computation of average fuel energy in stable travelling zones.
FIG. 10 is a figure depicting an example of a screen displaying time series changes of fuel energy and regenerative power.
FIG. 11 is a chart depicting an example of time series changes of fuel energy at the time of travelling in a stable travelling zone.
FIG. 12 is a chart depicting an example of time series changes of blow-by pressure at the time of travelling in a stable travelling zone.
FIG. 13 is a flowchart depicting an example of a process of distinguishing factors of an increase in fuel energy from one another.
FIG. 14 is a chart depicting an example of time series changes of grid temperature at the time of travelling in a stable travelling zone.
FIG. 15 is a flowchart depicting an example of a deterioration determination process for a grid fan.

### Modes for Carrying Out the Invention

Hereinbelow, embodiments of the present invention are explained using the figures. Note that equivalent elements are given identical reference characters in the respective figures, and overlapping explanation is omitted as appropriate.

### [First Embodiment]

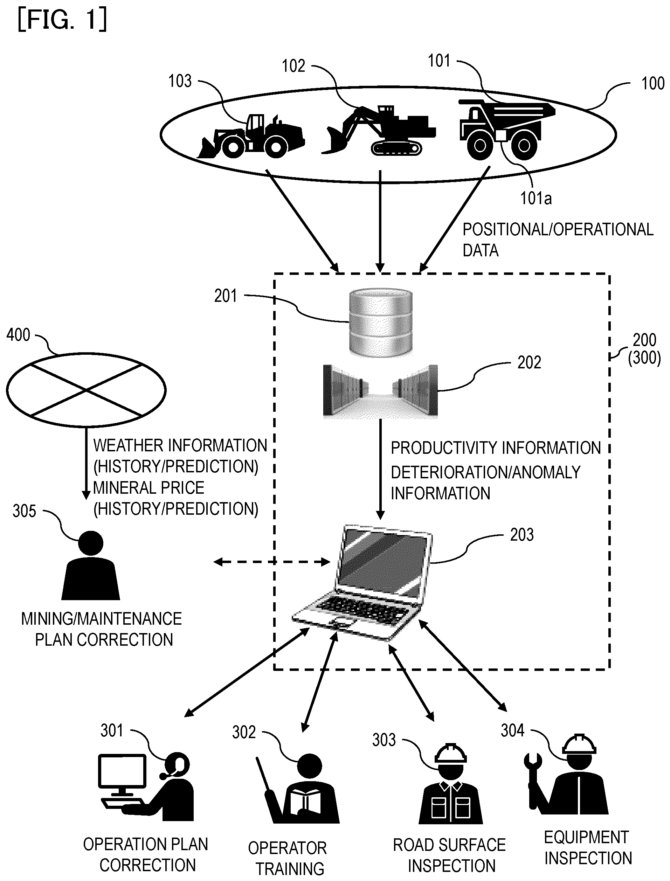

A first embodiment of the present invention is explained using FIG. 1 to FIG. 7.

FIG. 1 is a figure depicting an overall view of a mine management system. A mine management system 200 includes a storage apparatus 201 (e.g. a database) that aggregates positional information and operational information from each of a plurality of mining machines (a mining dump truck 101, an excavator 102, a dozer 103, etc.) that are managed together and travel in the same mining area 100, a processing apparatus 202 (e.g. a server) that computes a productivity index of the mine on the basis of the positional information and the operational information concerning each of the mining machines 101 to 103 and identifies a deteriorated/anomalous state or the like of components used in the mining dump truck 101, and a display terminal apparatus 203 (e.g. laptop computers and mobile terminals) that displays the productivity index, the deteriorated/anomalous state, and the like in a dashboard format. Here, although it is desirable that operational data of each of the mining machines 101 to 103 be serially transmitted to the mine management system 200, the operational data can not necessarily be transmitted serially considering the communication status and communication cost. In view of this, it is assumed that the processing apparatus 202 in the present embodiment starts a process after a certain amount of operational data is buffered. For example, the amount of operational data to be buffered is decided on the basis of time equivalent to the longest past cycle from loading to the next loading or an amount of data equivalent to the longest cycle. On the mining dump truck 101 (hereinbelow, referred to as a "machine" as appropriate), a sensor 101a (a GPS sensor, pitch angle sensors, payload sensors, a current sensor, a voltage sensor, etc.) that senses information concerning the machine 101 is mounted. Note that, since the display terminal apparatus 203 includes laptop computers and mobile terminals, the number of apparatuses where information is displayed is not limited to one and may be greater than one. In this case, since personal computers and mobile terminals have display areas with different sizes, information displayed in a dashboard format may be displayed on a personal computer at an office, and information displayed on an onboard monitor of a mining machine or a mobile terminal such as a smartphone may be displayed in such a format that only information edited/selected at an office is displayed. It becomes possible to realize flexible information provision according to use environments.

Users of the mine management system 200 can detect a productivity reduction of the mine early by using information (dashboard information) displayed on the display terminal apparatus 203, and maintain/manage the productivity of the mine by implementing a measure based on a factor of the reduction in productivity. For example, an operation planner 301 of the mine can correct an operation plan of each mining dump truck 101 by using the dashboard information. On the basis of the dashboard information, an operator trainer 302 can find an operator whose operation should be improved, and give operation instructions. On the basis of the dashboard information, a road surface maintenance staff member 303 can early identify and repair a road surface portion that is causing a productivity reduction. On the basis of the dashboard information, an equipment maintenance staff member 304 can identify and repair or perform calibration for deterioration or malfunctions of equipment used in the mining machines 101 to 103. In addition, by combining weather information (history/prediction) or mineral price (history/prediction) acquired via the Internet 400 with the dashboard information, it is possible to give an instruction for correcting a mining/maintenance plan to a mining manager 305, or to give an improvement instruction for preventing a productivity reduction to the operation planner 301, the operator trainer 302, the road surface maintenance staff member 303, and the equipment maintenance staff member 304. Note that the display format of the display terminal apparatus 203 is not limited to a dashboard format and may be a report format or an email format. Whereas a machine management system 300 in the present embodiment is configured as a subsystem of the mine management system 200 that notifies the equipment maintenance staff member 304 of the state of deterioration of the mining dump truck 101, the machine management system 300 may be constructed as a system independent of the mine management system 200.

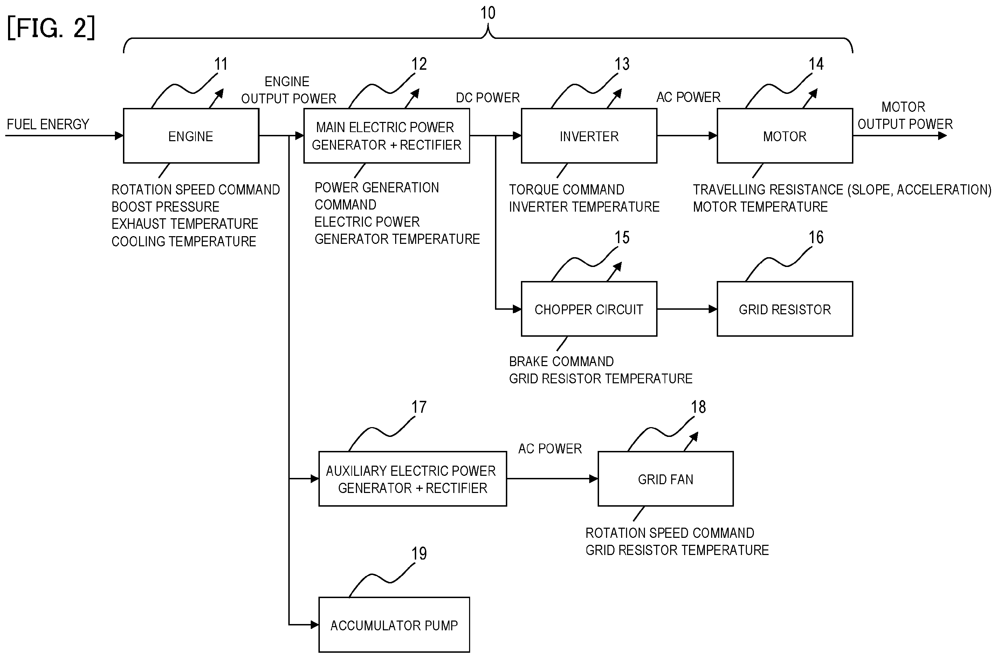

FIG. 2 is a figure depicting an energy flow of a powertrain system of the mining dump truck 101. A powertrain system 10 has an engine 11, a main electric power generator 12 (including a rectifier), an inverter 13, and a motor 14. The engine 11 is controlled according to a rotation speed command, boost pressure, exhaust temperature, and cooling temperature. The main electric power generator 12 is controlled according to a power generation command and electric power generator temperature. The inverter 13 is controlled according to a torque command and inverter temperature. The motor 14 is controlled according to travelling resistance (slope or acceleration) and motor temperature.

Thermal energy (fuel energy) input to the engine 11 is converted into kinetic energy (engine output power) by the engine 11. This engine output power is used to rotate the main electric power generator 12 at the time of motor power running. The kinetic energy is converted into electric energy (DC power) by the rectifier, is further converted into electric energy (AC power) according to a torque command at the inverter 13, and thereafter is changed again into kinetic energy (motor output power) by the motor 14. Because of this, the fuel energy input at the time of power running varies significantly depending on a driver request (accelerator operation).

On the other hand, at the time of motor regeneration, the kinetic energy of the machine 101 turns into electric energy (regenerative power) due to the rotation of the motor 14 via the tires, is converted into a direct current by the inverter 13, thereafter passes through a chopper circuit 15, and is released as thermal energy at a grid resistor 16. The chopper circuit 15 is controlled according to a brake command and grid resistor temperature. In addition, at this time, power generation by the main electric power generator 12 is stopped, and thermal energy input to the engine 11 is consumed at an auxiliary electric power generator 17 as drive power of a grid fan 18 for cooling the grid resistor 16. The grid fan is controlled according to a rotation speed command and the grid resistor temperature. Typically, the grid fan 18 has low output power and also has small changes in the output power as compared with the motor 14. Accordingly, variations of the fuel energy are small (stabilized) as compared to those at the time of power running.

In addition, the engine 11 is coupled with an accumulator pump 19 for driving a steering or a friction brake. When accumulator pressure lowers, a load is applied for driving the accumulator pump 19, and this becomes apparent as rotational variations of the engine 11 or a fuel increase for reducing the rotational variations. However, for example, at the time of travelling with no load on a downward steep slope (an approximately 10% slope), the machine travels on a straight path for ensuring safety, and thus steering operation is not performed. In this case, accelerator operation is not performed either since regenerative braking is used to the maximum, operation of the grid fan 18 is fixed at its maximum output operation, and the fuel energy is stabilized. In a method explained in the present embodiment, such a travelling zone where the thermal energy is stabilized is determined in advance as a stable travelling zone, and engine deterioration determination is performed using thermal energy tallied values in the stable travelling zone.

In addition, energy efficiency of the powertrain system 10 depicted in FIG. 2 varies significantly depending on temperature and operating conditions. For example, the regenerative power varies significantly depending on deceleration, a load weight, or the magnitude of a slope. Hence, it is difficult to perform deterioration determination simply on the basis of comparison of the regenerative power. A downward steep slope on which the machine is travelling with no load is a travelling zone where the regenerative power is stabilized most. In a method disclosed in the present embodiment, deterioration determination for the motor 14 or the inverter 13 is performed from tallied values of the regenerative power in this travelling zone. Furthermore, the main electric power generator 12 is in a stopped state in this travelling zone. In a disclosed method, deterioration determination for the main electric power generator 12 is also performed on the basis of powertrain system efficiency at the time of travelling with no load when the main electric power generator 12 is in operation. Details are explained hereinbelow.

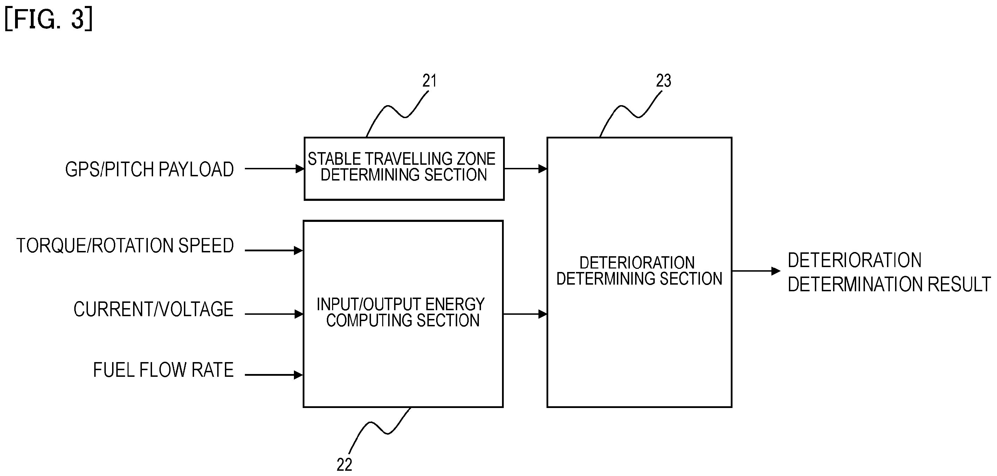

FIG. 3 is a block diagram depicting an example of a deterioration determination process for the powertrain system 10. A stable travelling zone determining section 21 determines whether or not a travelling zone where the machine 101 is travelling is a stable travelling zone. Specifically, the stable travelling zone determining section 21 determines whether or not the travelling zone is one with a downward steep slope, by use of altitude information from the GPS sensor or by use of the pitch angle sensors provided to the front and rear of the machine body, and determines whether or not the machine is travelling with no load on the basis of suspension pressure of the tires (sensed by the payload sensors). Typically, road geometries change as mining at the mine continues. However, by specifying stable travelling zones in advance by a method like the one mentioned later, it becomes possible to determine the stable travelling zones only by use of the GPS positional information without slope calculation at the time of diagnosis. Alternatively, in a case where GPS coordinates of a downward steep slope by trolley overhead wires, for example, have been found out in advance from map information concerning the mine site, stable travelling zones may be determined using the GPS coordinates.

An input/output energy computing section 22 computes the kinetic energy (engine output power or motor output power) of the engine 11 or motor 14 from torque/rotation speed information retained by a machine controller (a controller that controls the machine 101), computes electric energy obtained by conversion at the main electric power generator 12, the inverter 13, and the chopper circuit 15 from the voltage/current of a circuit (sensed by the voltage sensor and the current sensor), and further computes fuel energy input to the engine 11 from the flow rate of fuel input to the engine 11.

A deterioration determining section 23 tallies input/output energy (kinetic energy, electric energy, fuel energy, etc.) in a stable travelling zone, and performs deterioration determination for the powertrain system 10 on the basis of the values of the input/output energy. Note that all the processing blocks 21 to 23 may be implemented on the server 202, but some of the blocks may be implemented on the mining dump truck 101. For example, if the stable travelling zone determining section 21 and the input/output energy computing section 22 are mounted on the mining dump truck 101 while only the deterioration determining section 23 is mounted on the server 202, data transmitted from the mining dump truck 101 to the server 202 is limited to the input/output energy in the stable travelling zone, and accordingly, deterioration determination can be realized with a smaller communication amount.

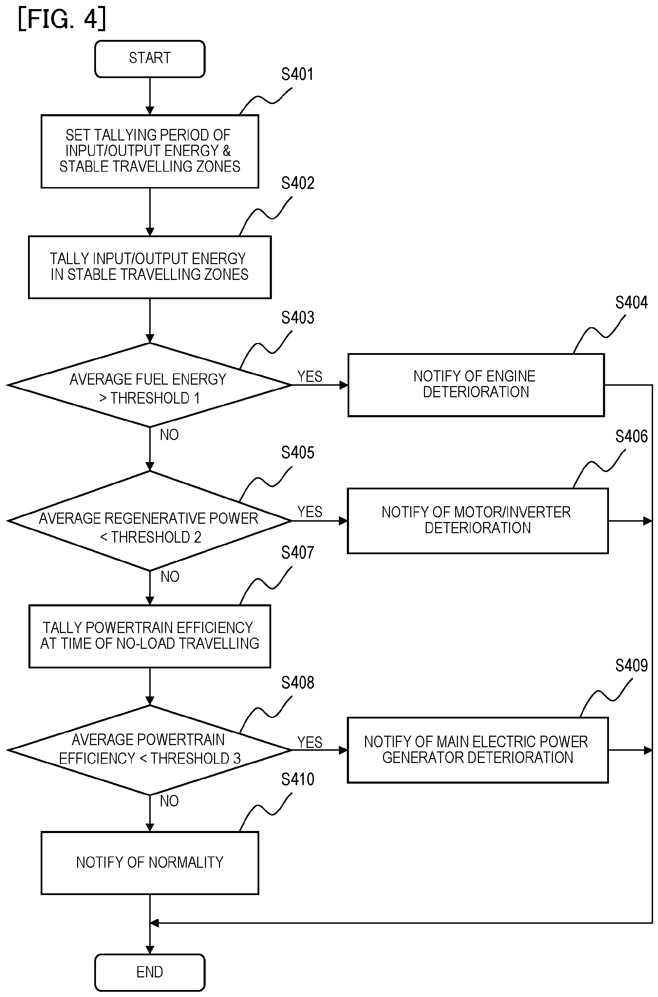

FIG. 4 is a flowchart depicting an example of a process performed by the deterioration determining section 23. At Step S401, in response to operation of the display terminal apparatus 203 by a user, a period of tallying input/output energy and stable travelling zones are set. In the present embodiment, as mentioned later, stable travelling zones are managed using mesh IDs, and here, the user can specify mesh IDs and a period for and in which input/output energy is to be tallied, by using a GUI such as a dashboard.

At Step S402, input/output energy in at least one stable travelling zone is tallied. At this time, if the number of the set mesh IDs is large and the set tallying period is short, conditions related to road surfaces, air temperature, and the like become equal to those for other machines. Accordingly, selection of maintenance target machines can be performed more appropriately by relative comparison of input/output energy mentioned later. If the number of the set mesh IDs is small and the set tallying period is long, on the other hand, this results in tallying input/output energy of one machine under the same conditions, and thereby it becomes easier to determine deterioration of the machine caused by ageing. Accordingly, deterioration determination is first performed for one week for approximately 20 mesh IDs. A machine determined as being deteriorated at that time is, for example, relatively compared with other machines with a shorter period, or checked for aging with a longer period. In this manner, deterioration determination can be realized more reliably.

Processes at and after Step S403 are processes of identifying a deteriorated component of the powertrain system 10. At Step S403, it is determined whether or not tallied average fuel energy (although the average value is used here, another statistic such as the median or the mode may be used) is greater than a predetermined threshold **1.** When the tallied average fuel energy is greater than the threshold 1 (YES), the procedure proceeds to Step S404, and, when the tallied average fuel energy is equal to or smaller than the threshold 1 (NO), the procedure proceeds to Step S405.

At Step S404, the increase in the fuel energy is regarded attributable to engine deterioration, a notification to that effect is given to users, and the procedure ends. At Step S405, it is determined whether or not tallied average regenerative power energy is smaller than a predetermined threshold 2. When the tallied average regenerative power energy is smaller than the threshold 2 (YES), the procedure proceeds to Step S406, and, when the tallied average regenerative power energy is equal to or greater than the threshold 2 (NO), the procedure proceeds to Step S407.

At Step S406, the lowering in the regenerative power is regarded attributable to deterioration of the motor or the inverter, a notification to that effect is given to users, and the procedure ends. At Step S407, powertrain efficiency at the time of travelling with no load is tallied. Specifically, in the tallying period, average efficiency (Σ(motor efficiency)/Z(fuel output power)) is tallied from fuel energy and motor output power at the time when it is determined that the machine is travelling with no load on the basis of the load amount. At subsequent Step S408, it is determined whether or not the average powertrain efficiency is lower than a predetermined threshold 3. When the average powertrain efficiency is lower than the threshold 3 (YES), the procedure proceeds to Step S409, and, when the average powertrain efficiency is equal to or higher than the threshold 3 (NO), the procedure proceeds to Step S410.

At Step S409, since the engine 11, the motor 14, and the inverter 13 have been determined as being normal at Steps S403 and S405, it is determined by a process of elimination that the lowering in the average powertrain efficiency is attributable to deterioration of the main electric power generator 12, a notification to that effect is given to users, and the procedure is ended. At Step S410, a notification that the powertrain system 10 is normal is given to users, and the procedure is ended.

Note that the notifications of the deterioration determination at Steps S404, S406, and S409 can be given in any format as long as the users to which the notifications are given can recognize the notifications, like a graph format that represents time series changes depending on degrees of deterioration or a simple text format that represents deterioration by levels such as A to C. In addition, since the display terminal apparatus 203 to which the notifications are given includes laptop computers and mobile terminals as described above, settings regarding apparatuses to which the notifications are given may be made in any combinations, for example, by setting a laptop computer and an onboard monitor as apparatuses to which the notification concerning engine deterioration is given, setting only a mobile terminal as an apparatus to which the notification concerning deterioration of the motor/inverter is given, and so on. Furthermore, the users can set as desired also the frequency of notification by setting the frequency of notification concerning engine deterioration to once a day, setting the frequency of notification concerning motor/inverter to once a week, and so on.

Thus, the users can find not only a machine whose powertrain system 10 is deteriorated, but specifically which portion of the powertrain system 10 is deteriorated, and accordingly, it is possible to arrange maintenance parts and prepare a tester in advance. In addition, it is possible to perform more reliable deterioration determination by changing the number of stable travelling zones and a tallying period.

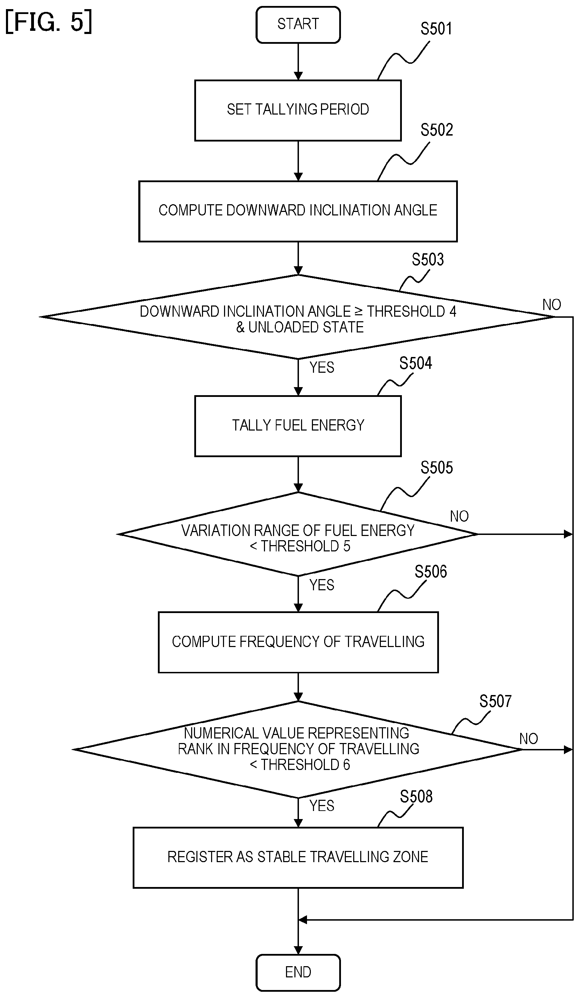

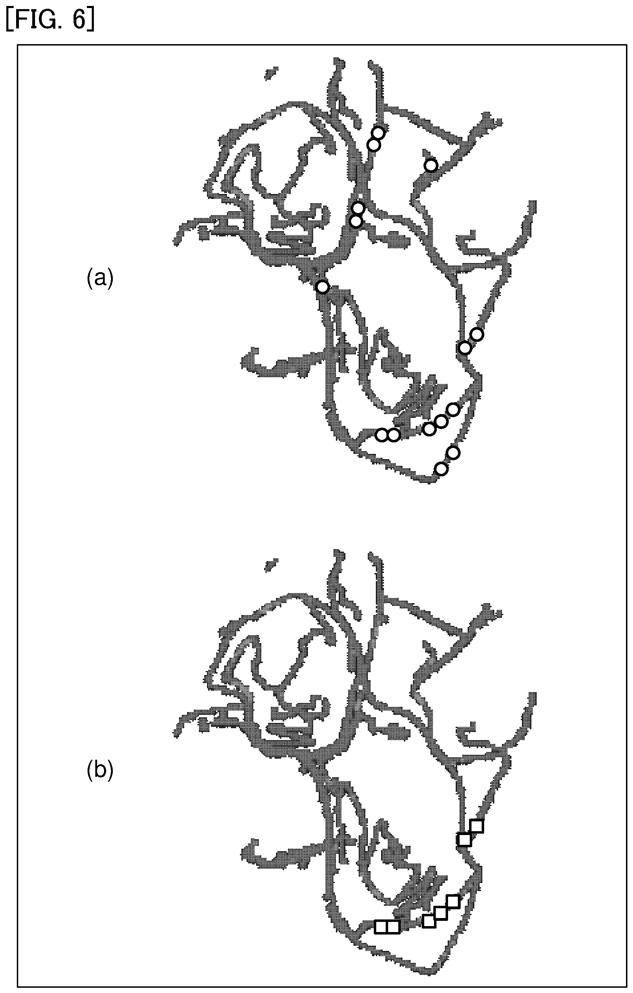

A stable travelling zone determining method in the present embodiment is explained using FIG. 5 and FIG. 6.

FIG. 5 is a flowchart depicting an example of a process of registering a stable travelling zone in a database or the like. By setting mesh information concerning stable travelling zones (mesh IDs, GPS positional information) in advance using this flowchart, stable travelling zones can be determined on the basis of GPS and load amount information obtained at the time of travelling.

At Step S501, a tallying period is set. The length of the tallying period corresponds to time required for the mining dump truck 101 to travel main routes of the mine, and it is sufficient if a period of substantially one week is set, although this depends also on the scale of the mine. Note that, although this flowchart depicts a case where a stable travelling zone is set using data associated with one machine, this period can be made shorter in a case where data associated with a plurality of machines is used.

At Step S502, a downward inclination angle is calculated from GPS altitude coordinates and machine speed information. For example, the slope can be calculated as ΔH/V [%] from an altitude change ΔH [m/s] per second and the speed V [m/s].

At Step S503, it is determined whether or not the downward inclination angle is equal to or greater than a predetermined threshold 4 (e.g. 10%, which is deemed to be a steep slope) and the load amount is zero (unloaded state). When the downward inclination angle is equal to or greater than the threshold 4 and the mining dump truck 101 is in an unloaded state (YES), the procedure proceeds to Step S504, and, when the downward inclination angle is smaller than the threshold 4 or the mining dump truck 101 is in a loaded state (NO), the procedure is ended.

At Step S504, the fuel energy is tallied on the basis of the fuel flow rate. The fuel energy can be computed by l*D*H using fuel density D [kg/l] and a low heat generation amount H [kW/kg] for the fuel flow rate l [l/h].

At Step S505, it is determined whether or not a variation range of the fuel energy is smaller than a predetermined threshold 5. When the variation range is smaller than the threshold 5 (YES), the procedure proceeds to Step S506, and, when the variation range is equal to or greater than the threshold 5 (NO), the procedure is ended. As a result, a state where the accelerator is not released at the start of a steep slope, and a location where the accelerator is stepped on at the end of a slope can be excluded. FIG. 6 depicts an example of results of visualization of travelling data associated with one machine in one week. Here, GPS data is segmented with meshes with the size of approximately 30 m, and meshes where the mining dump truck 101 has passed through even once are displayed in gray. At Step S506, the frequency of travelling is calculated for each mesh of a downward steep slope with no load. At subsequent Step S507, it is determined whether or not a numerical value representing the rank in frequency is lower than a predetermined threshold 6. When the numerical value representing the frequency rank is lower than the threshold 6 (YES), the procedure proceeds to Step S508, and, when the numerical value representing the frequency rank is equal to or higher than the threshold 6 (NO), the procedure is ended. In (a) of FIG. 6, meshes of stable travelling zones whose numerical values representing the ranks in the frequency of travelling are determined as being equal to or lower than the threshold 6 at Step S507 are represented by circles.

At Step S508, each mesh ID is set as a stable travelling zone, and the procedure is ended. Any method may be used to specify a mesh ID on the basis of GPS, and, for example, it is possible to easily compute a mesh ID on the basis of GPS coordinates if quadkey is used. By adopting such a configuration, a user can select stable travelling zones that are downward steep slopes with no load where the mining dump truck 101 travels more frequently, and in which variations in the fuel energy are small. Note that the process explained here is an example, and stable travelling zones can be set similarly even if it is determined that there is a downward slope by use of a pitch angle obtained by the pitch sensors instead of a slope or even if regenerative power is used instead of fuel energy.

In addition, in the present embodiment, deterioration determination is not performed in all downward steep slopes with no load, but, as explained with reference to FIG. 5, downward steep slopes with no load where the mining dump truck 101 travels frequently are registered as stable travelling zones, and a user selects stable travelling zones where input/output energy is tallied actually from among them (Step S401 in FIG. 4). Meshes set as stable travelling zones at Step S401 in FIG. 4 from among the meshes represented by the circles in (a) of FIG. 6 are represented by squares in (b) of FIG. 6. By setting stable travelling zones in this manner, it is possible to compare a plurality of machines under the same conditions, and it is thus possible to perform more reliable deterioration determination by relative comparison to be mentioned later.

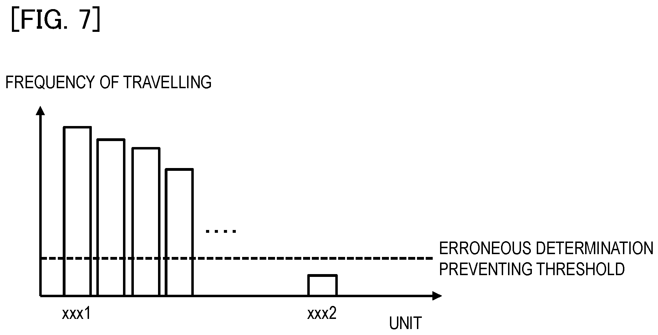

FIG. 7 is a figure depicting an example of a screen displaying results of tallying the frequency of travelling in stable travelling zones by each machine. xxx1 and xxx2 represent different machines. By presenting, to a user, information as to whether or not the frequency of travelling by each machine is higher than a predetermined threshold (erroneous determination preventing threshold), it becomes possible for a user to judge whether to set a greater number of mesh IDs for preventing erroneous determination caused by outliers or to set a longer tallying period. For example, since the frequency of travelling by Unit xxx1 is higher than the erroneous determination preventing threshold, deterioration determination results are trustable, whereas, even if Unit xxx2 is determined as being deteriorated, the trustability of the determination is low. Accordingly, in order to make deterioration determination for Unit xxx2 more reliable, it is sufficient if the user manual includes a description regarding the necessity for setting a longer tallying period or setting more stable travelling zones or a notification to that effect is given to a user in the system. In addition, when the frequency of travelling is lower than the erroneous determination preventing threshold, a message, "Trustability is insufficient because the amount of tallied values is too small," may be displayed on an onboard monitor of Unit xxx2, which is the target machine.

### (Summary)

In the present embodiment, the machine management system 300 that manages the machine 101 having the powertrain system 10 including the plurality of components 11 to 14 including the engine 11 includes the processing apparatus 202 that computes input/output energy (fuel energy and regenerative power) of one component among the plurality of components 11 to 14 on the basis of information concerning the machine 101 sensed by the sensor 101a provided to the machine 101, in which the processing apparatus 202 is configured to set, as a stable travelling zone, a travelling zone where the input/output energy is stabilized among travelling zones of the machine 101, tally values of the input/output energy in the stable travelling zone, and detect deterioration of the one component on the basis of the values of the input/output energy tallied in the stable travelling zone.

According to the present embodiment thus configured, deterioration of the components 11 to 14 included in the powertrain system 10 of the machine 101 is determined on the basis of tallying results of the input/output energy in the travelling zone where the input/output energy of the components 11 to 14 is stabilized. Thus, deterioration determination opportunities for the components 11 to 14 increase, and accordingly, it becomes possible to reliably detect deterioration of the components 11 to 14.

In addition, the powertrain system 10 in the present embodiment has the main electric power generator 12 driven by the engine 11, the motor 14 that drives the machine 101, and the inverter 13 that supplies power from the main electric power generator 12 to the motor 14, and the stable travelling zone is a travelling zone where power generation by the main electric power generator 12 is stopped. Thus, it is possible to set, as the stable travelling zone, a travelling zone where input/output energy is more stabilized.

In addition, the stable travelling zone in the present embodiment is a travelling zone with a downward slope where the machine 101 travels in an unloaded state. Thus, it is possible to reliably detect deterioration of the powertrain system 10 of the mining dump truck 101.

In addition, the sensor 101a in the present embodiment includes the pitch angle sensors or the GPS sensor, and the processing apparatus 202 is configured to detect the downward slope on the basis of the pitch angle of the machine 101 sensed by the pitch angle sensors or altitude information sensed by the GPS sensor. Thus, it is possible to enhance accuracy of sensing the downward slope.

In addition, the processing apparatus 202 in the present embodiment is configured to detect deterioration of the engine 11 on the basis of fuel energy input to the engine 11 which energy is tallied in the stable travelling zone. Thus, it is possible to reliably detect deterioration of the engine 11.

In addition, the processing apparatus 202 in the present embodiment is configured to detect deterioration of the motor 14 or the inverter 13 on the basis of regenerative power of the motor 14 tallied in the stable travelling zone. Thus, it is possible to reliably detect deterioration of the motor 14 or the inverter 13.

In addition, the processing apparatus 202 in the present embodiment is configured to detect deterioration of the main electric power generator 12 on the basis of the efficiency of the powertrain system 10 tallied at the time of travelling with no load, when deterioration of none of the engine 11, the motor 14, and the inverter 13 is detected. Thus, it is possible to reliably detect deterioration of the main electric power generator 12.

In addition, the processing apparatus 202 in the present embodiment is configured to issue a notification as to, as a maintenance target machine, the machine 101 whose fuel energy in a predetermined period is greater than a predetermined threshold, the machine 101 whose regenerative power in the predetermined period is smaller than a predetermined threshold, or the machine 101 whose efficiency of the powertrain system 10 in the predetermined period is lower than a predetermined threshold. Thus, it is possible to promptly perform maintenance work of the machine 101 whose powertrain system 10 is deteriorated.

### [Second Embodiment]

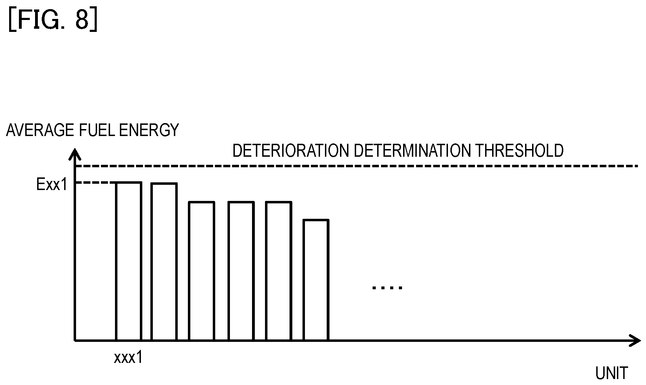

A second embodiment of the present invention is explained using FIG. 8 to FIG. 10. In the method explained in the first embodiment, deterioration of the engine 11, the main electric power generator 12, the inverter 13, or the motor 14 is detected while erroneous determination in deterioration determination for the powertrain system 10 is prevented. In addition, it is also explained that erroneous determination caused by outliers can be prevented by adjusting the number of stable travelling zones and a tallying period. In a method explained in the present embodiment, regarding selection from machines whose powertrain systems 10 have not been deteriorated yet, priority is given to machines (periodic maintenance target machines) for which periodic maintenance should be performed.

FIG. 8 is a figure depicting an example of a screen displaying results of tallying the average fuel energy of each machine in stable travelling zones. A deterioration determination threshold in the figure is the deterioration determination threshold of the engine 11 (the threshold 1 at Step S403 in FIG. 4), and it has already been explained that machines whose values exceed the deterioration determination threshold are maintenance target machines. In the present embodiment, periodic maintenance target machines are selected from machines whose values fall below the deterioration determination threshold. This is because maintenance of a dump powertrain system requires both preparation and man-hours, accordingly maintenance (periodic maintenance) is performed at predetermined intervals in many cases, and it is considered that, in such a case, maintenance is preferably performed starting from machines that are most deteriorated. Accordingly, in FIG. 8, relative comparison in which unit IDs of machines are arranged in descending order of average fuel energy is performed. Here, candidates of periodic maintenance target machines are selected in order starting from the leftmost machine in FIG. 8 (machine whose average fuel energy is the highest). Note that results of tallying the average regenerative power of each machine in stable travelling zones may be displayed, although an illustration thereof is omitted.

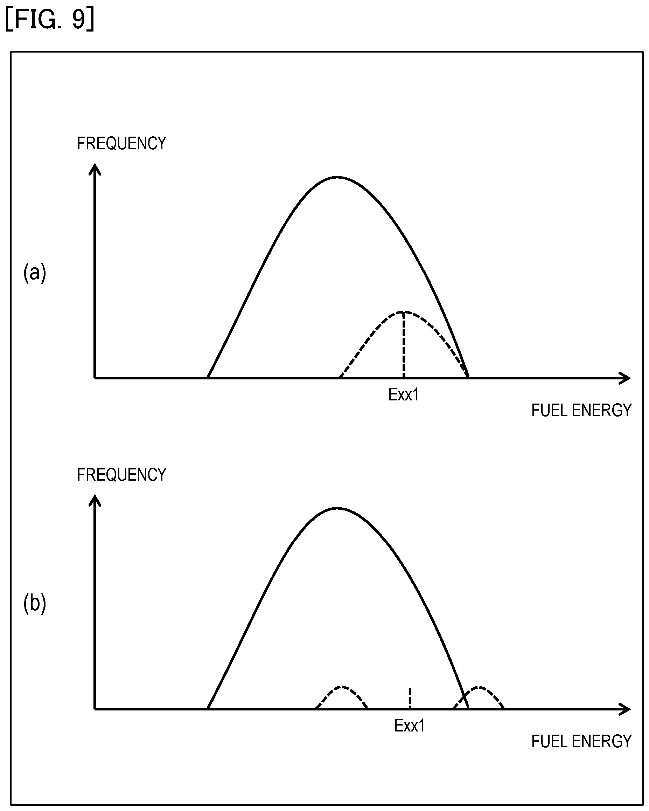

FIG. 9 is a figure depicting an example of distributions of fuel energy used for computation of average fuel energy in stable travelling zones. In (a) of FIG. 9 and (b) of FIG. 9, fuel energy distributions of Unit xxx1 with high average fuel energy Exx1 are represented by broken lines, and fuel energy distributions of all other machines are represented by solid lines. (a) of FIG. 9 depicts a distribution in a case where the engine 11 of Unit xxx1 is deteriorated due to mechanical abrasion or the like, and the fuel energy distribution is shifted to the right relative to the distribution of all other machines. Deterioration like this rarely worsens suddenly. Meanwhile, (b) of FIG. 9 depicts a distribution in a case where the engine 11 of Unit xxx1 experiences anomalies sometimes, and there is a possibility that Unit xxx1 becomes unable to travel due to an anomaly such as a trouble with the engine electric system. Therefore, fuel energy distributions are investigated in order starting from the leftmost machine with high average fuel energy in FIG. 8. In a case where fuel energy distributions of all the machines are distributions like the one represented by the broken line in (a) of FIG. 9, machines are treated as periodic maintenance target machines in order starting from the one whose average fuel energy is the highest. In a case where there is a machine with a fuel energy distribution like the one represented by the broken line in (b) of FIG. 9, this machine is given priority regarding selection as a periodic maintenance target machine. Note that FIG. 9 depicts an example in which fuel energy used for computation of average fuel energy is displayed using distribution diagrams, and a machine that experiences anomalies sometimes as in (b) is of high urgency. Hence, an ID or mobile terminal identification information (e.g. telephone number) of a maintenance staff member in charge of this machine may be associated in advance, and higher priority may be set as a notification destination. In addition, more flexible handling becomes possible if a mobile terminal is set as an apparatus on which simple information such as necessity/urgency of maintenance inspection is to be displayed, and the display terminal apparatus 203 at an office is set as an apparatus on which detailed information is to be displayed, for example.

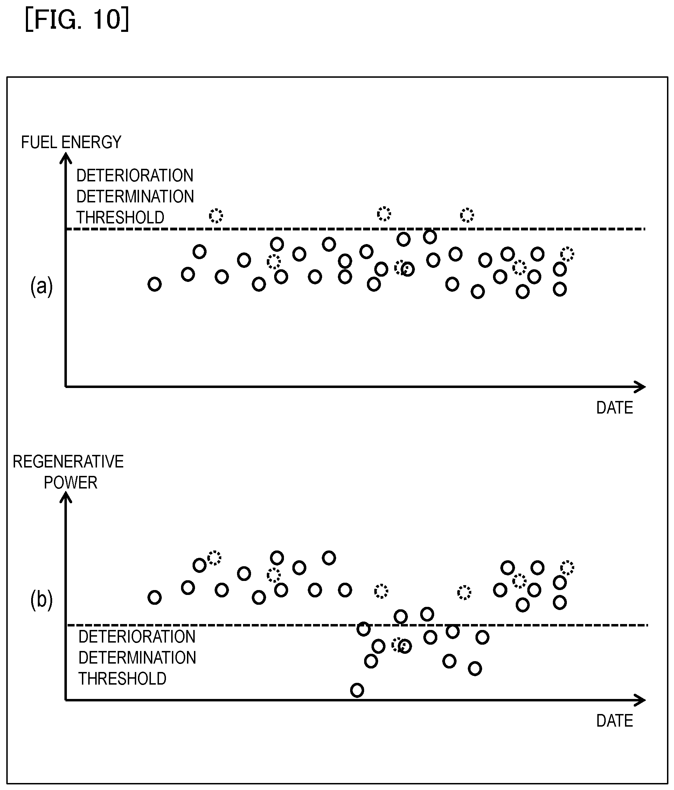

FIG. 10 is a figure depicting an example of a screen displaying time series changes of fuel energy and regenerative power. (a) of FIG. 10 depicts time series changes corresponding to (b) of FIG. 9. Deterioration factors can be distinguished from one another in some cases through more detailed analysis of data of locations and times at which a deterioration determination threshold is exceeded (mentioned in detail in third and fourth embodiments). In addition, (b) of FIG. 10 depicts a state where the regenerative power of all machines lowers only in a particular period. This state is attributable to a worsened road surface condition due to the weather, and it becomes possible to perform more reliable deterioration determination by excluding (prohibiting diagnosis of) data of such a period from data of a tallying period of input/output energy (fuel energy and regenerative power).

By presenting, to users, not only the average value of input/output energy, but also comparison with other units or energy amount distributions or time series changes as in the explanation above, it becomes possible to select maintenance target machines depending on the states of powertrain systems. In addition, the method of performing deterioration determination for the engine 11 with use of fuel energy has been explained thus far, but, in a case where fuel properties (fuel density / low heat generation amount) do not change, the same results can be obtained even when fuel flow rates are used instead.

### (Summary)

The machine management system 300 in the present embodiment includes the display terminal apparatus 203 that displays time series changes of fuel energy or regenerative power.

According to the present embodiment thus configured, it is possible to perform analysis for distinguishing deterioration factors of the powertrain system 10 from one another.

In addition, the machine management system 300 in the present embodiment includes the display terminal apparatus 203 that displays a result of tallying average fuel energy or average regenerative power of each machine in a stable travelling zone. Thus, it is possible to perform selection of a maintenance target machine more appropriately.

In addition, the processing apparatus 202 in the present embodiment is configured to exclude a particular period from a tallying period of fuel energy or regenerative power when the regenerative power of a plurality of the machines 101 lowers simultaneously in the particular period. Thus, it is possible to reliably perform deterioration determination for the engine 11, the motor 14, or the inverter 13.

### [Third Embodiment]

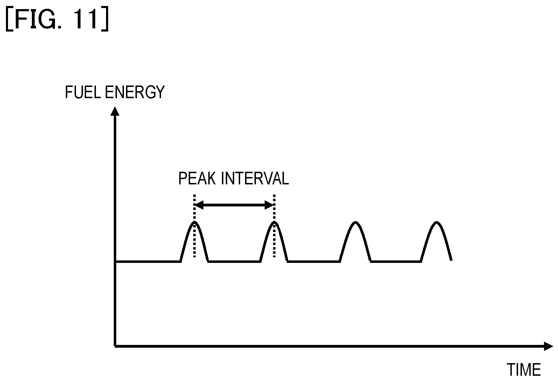

A third embodiment of the present invention is explained using FIG. 11 to FIG. 13. In a method explained in the present embodiment, a deterioration factor in the case where the engine 11 is determined as being deteriorated at Step S404 in FIG. 4 is determined using operational data at the time of travelling in a stable travelling zone (at the time of travelling on a downward steep slope with no load).

FIG. 11 is a chart depicting an example of time series changes of fuel energy at the time of travelling in a stable travelling zone. When the accumulator pressure lowers, an additional load is applied to the engine 11 in order to drive the accumulator pump 19. Hence, rotational variations of the engine 11 occur or the fuel energy increases cyclically in order to reduce the rotational variations, and peak intervals are observed. The peak intervals become short in a manner corresponding to deterioration of the accumulator. If the deterioration worsens further, the accumulator pump 19 is kept driven always in the end, and it becomes not possible to observe peak intervals. Accordingly, the deterioration of the accumulator can be detected by grasping a phenomenon in which peak intervals become short.

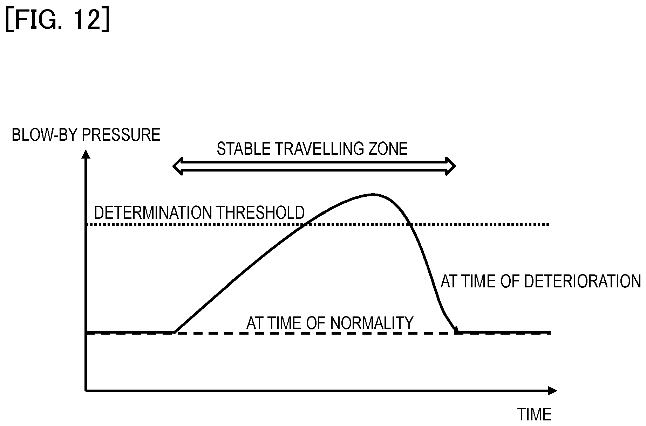

FIG. 12 is a chart depicting an example of time series changes of blow-by pressure at the time of travelling in a stable travelling zone. As depicted in this figure, the blow-by pressure at the time of travelling in the stable travelling zone is observed, and, when its value exceeds a predetermined threshold, it can be recognized that the engine 11 has been determined as being deteriorated due to a blow-by anomaly. This uses such a property that the engine 11 is in an idle state while the grid fan 18 is rotated by the auxiliary electric power generator 17, typically the idle state is a non-oversupply state, there is thus no space for the blow-by pressure to escape into, and the blow-by pressure does not lower even if blow-by control is performed. Accordingly, a pressure increase caused by blow-by is most easily detected during travelling in the stable travelling zone, and this enables determination that a factor of the engine deterioration is blow-by (insufficient compression).

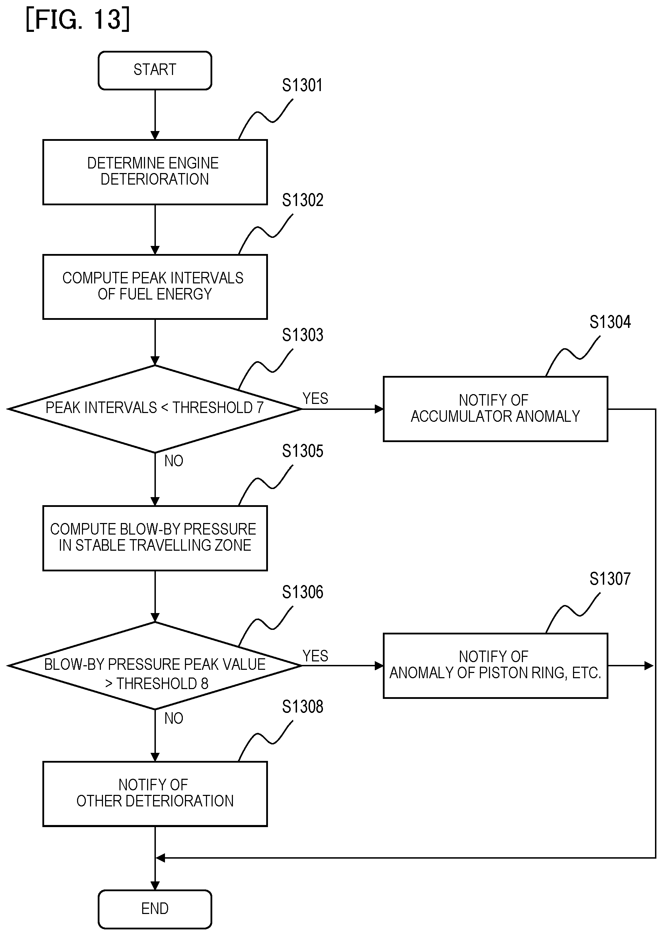

FIG. 13 is a flowchart depicting an example of a process of distinguishing factors of an increase in fuel energy from one another. At Step S1301, engine deterioration determination is performed by fuel energy increase determination (equivalent to Steps S401 to S404 in FIG. 4) or comparison with other machines (mentioned in detail in the second embodiment). At Step S1302, peak intervals of the fuel energy at the time of travelling in a stable travelling zone are computed. At Step S1303, it is determined whether or not the peak intervals are shorter than a predetermined threshold 7. When the peak intervals are shorter than the threshold 7 (YES), the procedure proceeds to Step S1304, and, when the peak intervals are equal to or longer than the threshold 7 (NO), the procedure proceeds to Step S1305.

At Step S1304, since activation intervals of the accumulator are short, a notification that there is a leakage or the accumulator pump 19 is experiencing an output power reduction (accumulator anomaly) is given to a user, and the procedure is ended. At Step S1305, the blow-by pressure in a stable travelling zone is computed. At Step S1306, it is determined whether or not a peak value of the blow-by pressure is higher than a predetermined threshold 8. When the peak value is higher than the threshold 8 (YES), the procedure proceeds to Step S1307, and, when the peak value is equal to or lower than the threshold 8 (NO), the procedure proceeds to Step S1308.

At Step S1307, a notification that there is an increase in the blow-by is issued, and the user is notified that a piston ring, a gasket, or the like is experiencing an anomaly. At Step S1308, a notification that a component other than the accumulator or the piston ring is experiencing an anomaly is issued. Thus, the user can appropriately judge which portion should be checked at the time of engine deterioration detection.

### (Summary)

The processing apparatus 202 in the present embodiment is configured to detect an anomaly of a cylinder ring or a gasket of the engine 11 on the basis of the blow-by pressure of the engine 11 in a stable travelling zone when deterioration of the engine 11 is detected.

In addition, the processing apparatus 202 in the present embodiment is configured to detect an anomaly of an accumulator that accumulates pressure of fuel to be supplied to the engine 11, on the basis of a peak interval of fuel energy to be supplied to the engine 11 in a stable travelling zone, when deterioration of the engine 11 is detected.

According to the present embodiment thus configured, it is possible for a user to appropriately judge which portion should be checked when deterioration of the engine 11 is detected.

### [Fourth Embodiment]

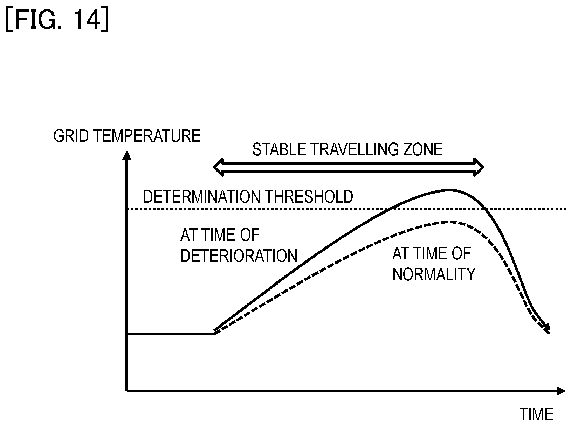

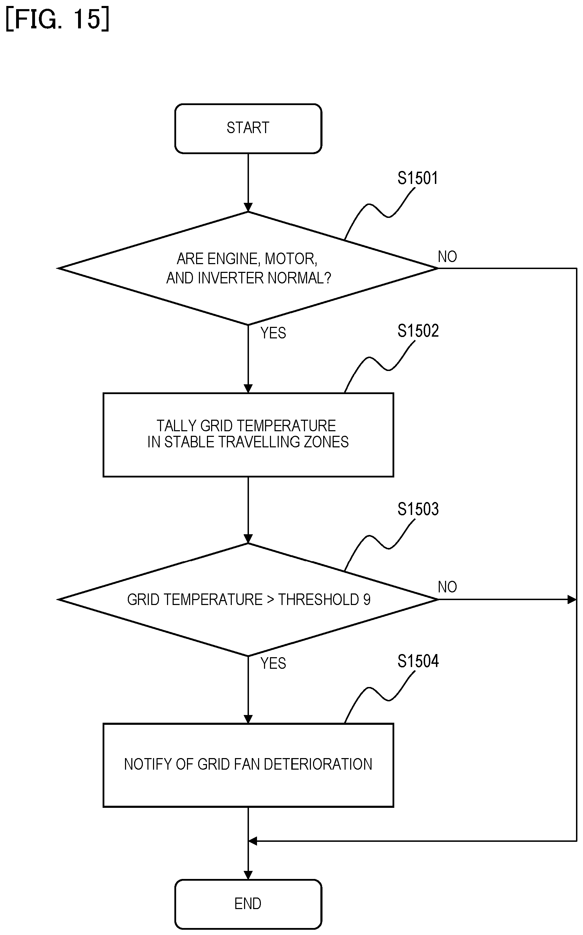

A fourth embodiment of the present invention is explained using FIG. 14 and FIG. 15. In a method explained in the present embodiment, deterioration of the grid fan 18 is detected in a case where the engine 11, the motor 14, and the inverter 13 are determined as being normal in the flowchart in FIG. 4.

FIG. 14 is a chart depicting an example of time series changes of grid temperature at the time of travelling in a stable travelling zone. When the rotation speed of the grid fan 18 decreases due to deterioration, or when the flow rate of air that hits the grid resistor 16 decreases due to a clogged filter, the grid temperature increases as compared with that at the time of normal operation. In view of this, when the grid temperature exceeds a predetermined determination threshold, the grid fan 18 is determined as being deteriorated. In addition, at the time of travelling in the stable travelling zone, the regenerative power is almost maximized, and, in order to cope with this, the grid fan 18 also performs maximum operation. Accordingly, the influence of lowering in the rotation speed caused by deterioration of the grid fan 18 becomes most noticeable in the grid temperature.

FIG. 15 is a flowchart depicting an example of a deterioration determination process for the grid fan 18. At Step S1501 (equivalent to Steps S401 to S406 in FIG. 4), it is determined whether or not the engine 11, the motor 14, and the inverter 13 are normal on the basis of the magnitude of fuel energy or regenerative power. When the engine 11, the motor 14, and the inverter 13 are determined as being normal at Step S1501 (YES), the procedure proceeds to Step S1502, and, when the engine 11, the motor 14, or the inverter 13 is determined as being anomalous (NO), the procedure is ended.

At Step S1502, the grid temperature in stable travelling zones is tallied. Then, at Step S1503, it is determined whether or not the tallied grid temperature is higher than a predetermined threshold 9. When the tallied grid temperature is higher than the threshold 9 (YES), the procedure proceeds to Step S1504, and, when the tallied grid temperature is equal to or lower than the threshold 9 (NO), the procedure is ended.

At Step S1504, since there is no increase in the regenerative power and the engine 11 is normal, it is determined that the grid fan 18 is deteriorated, and a notification to that effect is given to a user. A key point of the present embodiment is that it is determined in advance that the engine 11, the motor 14, and the inverter 13 are in normal states, and this makes it possible to prevent erroneous deterioration determination for the grid fan that can be caused by lowering in the engine output power or lowering in the regenerative power.

### (Summary)

The processing apparatus 202 in the present embodiment is configured to detect an anomaly of the grid fan 18 for cooling the grid resistor 16 that converts regenerative power into heat, on the basis of the temperature (grid temperature) of the grid resistor 16 in a stable travelling zone, when deterioration of none of the engine 11, the motor 14, and the inverter 13 is detected.

According to the present embodiment thus configured, it is possible to appropriately detect an anomaly of the grid fan 18.

While the embodiments of the present invention have been mentioned in detail thus far, the present invention is not limited to the embodiments described above and includes various modification examples. For example, the embodiments described above are explained in detail in order to explain the present invention in an easy-to-understand manner, and the present invention is not necessarily limited to embodiments including all the constituent elements explained. In addition, some of the constituent elements of an embodiment can also be added to the constituent elements of another embodiment, and some of the constituent elements of an embodiment can also be deleted or replaced with some of the constituent elements of another embodiment.

### Description of Reference Characters

- 10:: Powertrain system
- 11:: Engine (component)
- 12:: Main electric power generator (component)
- 13:: Inverter (component)
- 14:: Motor (component)
- 15:: Chopper circuit
- 16:: Grid resistor
- 17:: Auxiliary electric power generator
- 18:: Grid fan
- 19:: Accumulator pump
- 21:: Stable travelling zone determining section
- 22:: Input/output energy computing section
- 23:: Deterioration determining section
- 100:: Mining area
- 101:: Mining dump truck (machine)
- 101a:: Sensor
- 102:: Excavator
- 103:: Dozer
- 200:: Mine management system
- 201:: Storage apparatus
- 202:: Server (processing apparatus)
- 203:: Display terminal apparatus
- 300:: Machine management system
- 301:: Operation planner
- 302:: Operator trainer
- 303:: Road surface maintenance staff member
- 304:: Equipment maintenance staff member
- 305:: Mining manager
- 400:: Internet

## Claims

1. A machine management system that manages a machine having a powertrain system constituted by a plurality of components including an engine, the machine management system comprising:
a processing apparatus that computes input/output energy of one component among the plurality of components on a basis of information concerning the machine sensed by a sensor provided to the machine, wherein
the processing apparatus is configured to
set, as a stable travelling zone, a travelling zone where the input/output energy is stabilized among travelling zones of the machine,
tally values of the input/output energy in the stable travelling zone, and
detect deterioration of the one component on a basis of the values of the input/output energy tallied in the stable travelling zone.

2. The machine management system according to claim **1,** wherein
the powertrain system has a main electric power generator driven by the engine, a motor that drives the machine, and an inverter that supplies power from the main electric power generator to the motor, and
the stable travelling zone is a travelling zone where power generation by the main electric power generator is stopped.

3. The machine management system according to claim 2, wherein the stable travelling zone is a travelling zone with a downward slope where the machine travels in an unloaded state.

4. The machine management system according to claim 3, wherein
the sensor includes a pitch angle sensor or a GPS sensor, and
the processing apparatus is configured to detect the downward slope on a basis of a pitch angle of the machine sensed by the pitch angle sensor or altitude information sensed by the GPS sensor.

5. The machine management system according to claim 2, wherein the processing apparatus is configured to detect deterioration of the engine on a basis of fuel energy input to the engine, the fuel energy being tallied in the stable travelling zone.

6. The machine management system according to claim 5, wherein the processing apparatus is configured to detect deterioration of the motor or the inverter on a basis of regenerative power of the motor tallied in the stable travelling zone.

7. The machine management system according to claim 6, wherein the processing apparatus is configured to detect deterioration of the main electric power generator on a basis of efficiency of the powertrain system tallied at time of travelling with no load, when deterioration of none of the engine, the motor, and the inverter is detected.

8. The machine management system according to claim 7, wherein the processing apparatus is configured to issue a notification as to, as a maintenance target machine, the machine whose fuel energy in a predetermined period is greater than a predetermined threshold, the machine whose regenerative power in the predetermined period is smaller than a predetermined threshold, or the machine whose efficiency of the powertrain system in the predetermined period is lower than a predetermined threshold.

9. The machine management system according to claim 6, comprising:
a display terminal apparatus that displays time series changes of the fuel energy or the regenerative power.

10. The machine management system according to claim 9, comprising:
a display terminal apparatus that displays a result of tallying average fuel energy or average regenerative power of each machine in the stable travelling zone.

11. The machine management system according to claim 5, wherein the processing apparatus is configured to detect an anomaly of a cylinder ring or a gasket of the engine on a basis of blow-by pressure of the engine in the stable travelling zone when deterioration of the engine is detected.

12. The machine management system according to claim 5, wherein the processing apparatus is configured to detect an anomaly of an accumulator that accumulates pressure of fuel to be supplied to the engine, on a basis of a peak interval of fuel energy to be supplied to the engine in the stable travelling zone, when deterioration of the engine is detected.

13. The machine management system according to claim 6, wherein
the processing apparatus is configured to detect an anomaly of a grid fan for cooling a grid resistor that converts the regenerative power into heat, on a basis of temperature of the grid resistor in the stable travelling zone, when deterioration of none of the engine, the motor, and the inverter is detected.

14. The machine management system according to claim 6, wherein the processing apparatus is configured to exclude a particular period from a tallying period of the fuel energy or the regenerative power when the regenerative power of a plurality of the machines lowers simultaneously in the particular period.
